# EUROPÄISCHE PATENTANMELDUNG

(11) **EP 0 870 482 A1**
(43) Veröffentlichungstag der Anmeldung: **14.10.1998**
(21) Anmeldenummer: 98106090.8
(22) Anmeldetag: 02.04.1998
(51) Int. Cl.: A61C 19/04

(54) **Vorrichtung zum Bestimmen des elektrischen Widerstandes von Zähnen**

(30) Priorität: 08.04.1997 DE 19714397
(71) Anmelder: Gente, Michael, Dr., 35091 Cölbe-Bürgeln (DE)
(72) Erfinder: Gente, Michael, Dr., 35091 Cölbe-Bürgeln (DE)
(74) Vertreter: Haft, von Puttkamer, Berngruber, Czybulka

(57) **Zusammenfassung**

Eine Vorrichtung zum Bestimmen des elektrischen Widerstandes von Zähnen (8), insbesondere zum Bestimmen der Dicke des Dentins über der Pulpahöhle weist eine Elektrodenanordnung auf, welche zumindest eine Meßelektrode (2) mit definierter Meßfläche hat, die auf die Zahnoberfläche aufsetzbar ist. Des weiteren ist eine Bezugselektrode (11) vorgesehen, die an das elektrisch leitende Gewebe (12) des Patienten anlegbar ist. Zum Einleiten des Stroms über die Meßelektrode (2) ist eine Stromquelle (9) vorgesehen, welche zwischen Meßelektrode (2) und Bezugselektrode (11) geschaltet ist. Der elektrische Widerstand des zwischen den Elektroden (2) und (11) liegenden Zahnabschnitts wird mit einem Meßgerät (10) bestimmt. Die Vorrichtung ist dadurch gekennzeichnet, daß die Meßelektrode (2) als Hohlzylinder ausgebildet ist.

## Beschreibung

Die Erfindung betrifft eine Vorrichtung zum Bestimmen des elektrischen Widerstandes von Zähnen, insbesondere zum Bestimmen der Dicke des Dentins über der Pulpahöhle nach dem Oberbegriff des Anspruchs 1, mit einer Meßelektrode mit definierter Meßfläche, die auf die Zahnoberfläche aufsetzbar ist, und einer Bezugselektrode, die an das elektrisch leitende Gewebe des Patienten anlegbar ist, ferner mit einer Stromquelle zwischen Meßelektrode und Bezugselektrode zum Einleiten eines Stroms in den Zahn über die Meßelektrode und mit einem Meßgerät zum Bestimmen des elektrischen Widerstandes des zwischen den Elektroden liegenden Zahnabschnitts.

Eine derartige Vorrichtung ist beispielsweise aus der DE 36 15 632 C2 oder der DE 37 19 911 C2 bekannt. Bei der bekannten Vorrichtung wird der elektrische Widerstand von Zahnabschnitten mit Hilfe einer Meßelektrodenanordnung auf der Zahnoberfläche und einer Bezugselektrode an dem Gewebe des Zahnfleisches bestimmt. Die Meßelektrodenanordnung kann auch zwei Meßelektroden enthalten, die beide auf die Zahnoberfläche aufgesetzt und mit dem Meßgerät zum Bestimmen des elektrischen Widerstands verbunden sind.

Mit der bekannten Vorrichtung ist es möglich, eine Mindestdicke des Dentins von vitalen Zähnen einzuhalten, die für die Aufnahme einer Füllung oder einer Krone bzw. Teilkrone bis in das Dentin präpariert werden müssen. Bekanntlich wird durch eine zu dicht an die Zahnpulpa heranreichende Präparation, das heißt bei einem zu tief reichenden Substanzabtrag des Dentins, die Vitalerhaltung der Pulpa gefährdet. Eine ähnliche Gefahr besteht für die Vitalität der Pulpa dann, wenn für die Befestigung zahnärztlicher Restaurationen kleine Sacklöcher in das Dentin gebohrt werden, um darin Stifte durch Klemmwirkung, Verschraubung , Zementierung Verklebung oder andere geeignete Maßnahmen zu verankern, an denen dann die Restauration befestigt wird, beziehungsweise die Bestandteil der Restauration sind und diese verankern.

Wird beim Bohren solcher Löcher die Pulpahöhle geöffnet oder reichen diese Löcher zu dicht an die Pulpahöhle heran, so entsteht eine erhebliche Gefährdung für die Vitalität des Zahns. Perforieren diese Löcher den Zahn nach außen, das heißt bis in das den Zahn im Bereich der Wurzel umgebende Gewebe, welches seinen Halt im Kieferknochen bewirkt, so kann dieser Zahn häufig nicht mehr erhalten werden.

Wenngleich mit der in den genannten Druckschriften beschriebenen Vorrichtung die Messung des elektrischen Widerstands von Zahnabschnitten grundsätzlich gut durchführbar ist, so hat sich doch gezeigt, daß die Zuverlässigkeit der Messung durch Ergreifen weiterer Maßnahmen erhöht werden kann.

Es ist Aufgabe der Erfindung eine eingangs genannte Vorrichtung derart auszubilden, daß die Zuverlässigkeit der Meßergebnisse erhöht wird.

Die Lösung dieser Aufgabe ergibt sich aus den Merkmalen des Anspruchs 1. Vorteilhafte Weiterbildungen der Erfindung ergeben sich aus den Unteransprüchen.

Gemäß der Erfindung ist die Meßelektrode stabförmig und mit einer Einrichtung zum Zuführen einer elektrisch leitfähigen Flüssigkeit zu der Meßfläche versehen. Die Meßelektrode ist z. B. als Hohlzylinder ausgebildet, kann aber auch etwa ein Vollstab sein, der am Rande eine Kerbe aufweist, über die die Flüssigkeit zur Meßfläche gelangt.. Die Flüssigkeit, welche vorzugsweise aus einer physiologischen Kochsalzlösung besteht, stellt einen sicheren elektrischen Kontakt zur Dentinoberfläche dar, da sich die Flüssigkeit auch einer nicht ebenen Oberfläche anpaßt.

In bevorzugter Weise sind die Abmessungen der Meßelektrode, z. B. des Hohlzylinders so, daß die Flüssigkeit aufgrund von Kapillarkräften in der Meßelektrode gehalten wird. Zur Verstärkung der Kapillarwirkung ist es bei einer hohlzylindrischen Meßelektrode von besonderem Vorteil, wenn der Hohlzylinder an beiden Stirnseiten offen ist.

Besonders günstig ist es, wenn die hohle Meßelektrode an einem Ende konisch ausgebildet ist. Hierdurch wird erreicht, daß die entsprechende stirnseitige Öffnung des Hohlzylinders einen geringeren Querschnitt aufweist als er im Inneren des Hohlzylinders vorhanden ist. Die Verringerung des Querschnitts der stirnseitigen Öffnung des Hohlzylinders wirkt sich ebenfalls sehr günstig auf die Kapillarwirkung des Hohlzylinders aus, so daß hierdurch die Menge der Flüssigkeit, die aufgrund der Kapillarkräfte im Hohlzylinder gehalten wird, vergrößert wird.

gemäß der Erfindung ist ein ferner ein elastischer Dichtungsring vorgesehen, welcher die Meßelektrode zumindest im Bereich der Meßfläche und vorzugsweise an ihrer gesamten Mantelfläche umschließt. Durch den Dichtungsring, welcher auch als Hohlzylinder ausgebildet sein kann, wird in vorteilhafter Weise erreicht, daß die Fläche des Zahns, welche mit der sich in der Meßelektrode befindlichen Flüssigkeit benetzt wird, eine definierte, reproduzierbare Größe hat. Dadurch, daß der Dichtungsring auf die Zahnoberfläche aufgedrückt wird, wird verhindert, daß die Flüssigkeit über den Querschnitt der Meßfläche hinaus verläuft. Dies ist besonders wichtig für die Zuverlässigkeit der Messung, da der Widerstand von der Größe der Fläche abhängt.

In besonders vorteilhafter Weise besteht der Dichtungsring aus Silikon. Hierdurch wird erreicht, daß die Dichtung frei von Verschmutzungen gehalten werden kann. Dies ist insbesondere bei der Verwendung der Meßelektrode im Mund eines Menschen von besonderer Bedeutung.

Bei einer weiteren Ausführungsform der Erfindung ist vorgesehen, daß die Meßelektrode fest in einer Halterung angeordnet ist, welche aus einem massiven, elektrisch leitenden Material besteht. Durch eine derartige Anordnung kann in vorteilhafter Weise die elektrische Verbindung mit der Meßelektrode einfach hergestellt werden. Durch die feste Anordnung der Meßelektrode in der Halterung wird ein äußerst geringer Übergangswiderstand erreicht. Da die Halterung vorzugsweise aus einem massiven, elektrisch leitenden Material besteht, kann am Ende der Halterung ein Anschluß für die Meßelektrode vorgesehen sein, ohne das besondere Leitungen zur Meßelektrode führen. Dadurch, daß die Halterung aus einem massiven Material besteht, wird zum einen ein sehr geringer elektrischer Widerstand erreicht, zum anderen wird dadurch das Gewicht etwas erhöht, was von einem behandelnden Zahnarzt als angenehm empfunden wird.

Besonders günstig ist es, wenn die Halterung lösbar mit einem stabförmigen, handhabbaren Grundkörper verbunden ist. Der Grundkörper kann Bedien- und/oder Anzeigeelemente aufweisen. Eine derart ausgebildete Ausführungsform laßt sich besonders leicht bedienen. Es können alle wesentlichen Funktionen in dem Grundkörper angeordnet sein, so daß im wesentlichen auf weitere Geräte verzichtet werden kann. Durch die lösbare Verbindung mit dem Grundkörper lassen sich auf einfache Weise unterschiedliche Halterungen, das heißt Meßelektroden mit dem Grundkörper verbinden. Das ist besonders dann von Vorteil, wenn Messungen an unterschiedlichen Personen vorgenommen werden müssen. So kann beispielsweise nach einer Messung die Halterung mit der Meßelektrode aus dem Grundkörper entfernt und beispielsweise zum Sterilisieren gegeben werden und, nachdem eine neue Halterung mit einer Meßelektrode mit dem Grundkörper verbunden worden ist, eine Messung bei einem anderen Patienten durchgeführt werden.

Mit der erfindungsgemäßen Vorrichtung kann die Dicke einer Dentinschicht über der Pulpa gemessen werden. Der elektrische Widerstand ist ein Maß für die Dicke der Dentinschicht. Kleine elektrische Widerstände entsprechen einer dünnen Dentinschicht, hohe elektrische Widerstände einer dicken Dentinschicht. Durch Abtasten der Dentinoberfläche mit der erfindungsgemäßen Meßelektrode kann festgestellt werden, wo Pulpahörner am dichtesten an die Oberfläche des Zahnstumpfes reichen. Die Höhe des Widerstandswertes gibt Auskunft darüber, ob noch tiefer präpariert werden darf.

Weitere Merkmale und Vorteile der Erfindung ergeben sich aus der nachfolgenden Beschreibung einer bekannten Ausführungsform der Erfindung.

Es zeigt:
Fig. 1 einen erfindungsgemäßen Grundkörper mit Halterung und Meßelektrode,
Fig. 2 eine Halterung mit Meßelektrode in vergrößerter Darstellung,
Fig. 3 eine Anordnung zur Messung am präparierten Zahn und
Fig. 4 eine andere Ausführungsform für eine Meßelektrode.

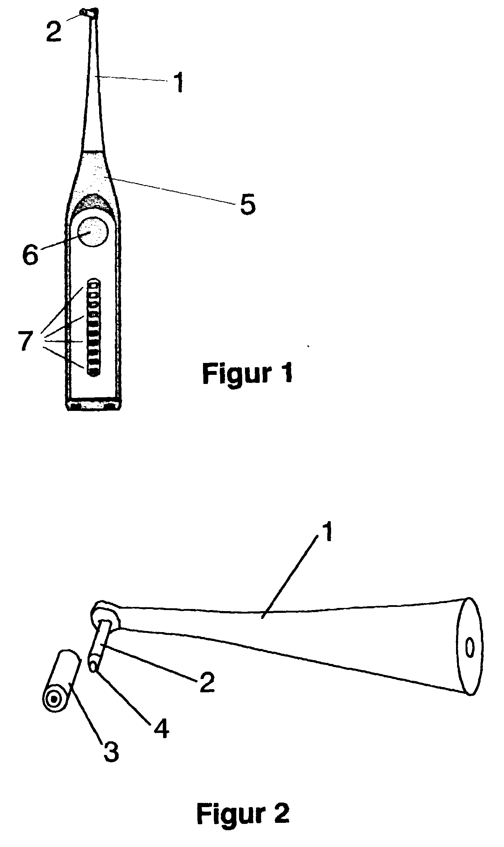

Wie der Figur 1 entnommen werden kann, ist eine Halterung (1), welche eine Meßelektrode (2) aufweist, mit einem stabförmigen, handhabbaren Grundkörper (5) verbunden. Die Verbindung der Halterung (1) mit dem Grundkörper (5) geschieht durch Aufstecken der Halterung (1) auf den Grundkörper (5). Der Grundkörper (5) weist einen Tastschalter (6) und als Leuchtdioden ausgebildete Anzeigeelemente (7) auf.

Wie insbesondere der Figur 2 entnommen werden kann, ist die Meßelektrode (2) fest in der Halterung (1) angeordnet. Die Meßelektrode (2) ist als Hohlzylinder, dessen beide Stirnseiten offen sind, ausgebildet. Ein Ende (4) der Meßelektrode (2) verläuft konisch. Hierdurch ist die Öffnung an diesem Ende geringer als die Querschnittsfläche im Inneren des Hohlzylinders.

Ein zylinderförmiger Dichtungsring (3), der aus Silikon besteht, kann auf die Meßelektrode (2) aufgeschoben werden. Der Dichtungsring (3) ist so ausgebildet, daß er die Meßelektrode (2) an ihrer Mantelfläche dicht umschließt. Die Höhe des Dichtungsringes (3) ist etwas größer als die Länge, mit der sich die Meßelektrode (2) aus der Halterung (1) erstreckt. Hierdurch kann der Dichtungsring (3) so auf die Meßfläche aufgedrückt werden, daß er sich etwas zusammendrückt.

Anhand der in Figur (3) dargestellten Anordnung wird die Funktionsweise der erfindungsgemäßen Vorrichtung nachfolgend kurz beschrieben.

Zur Vorbereitung der Messungen wird eine Bezugselektrode (11) an der Lippe oder am Zahnfleisch (12) des Patienten angeschlossen. Durch einen kurzen Druck auf den Taster (6) wird die Vorrichtung eingeschaltet. Die Meßelektrode (2) wird in ein bereitstehendes, nicht gezeigtes Dappenglas mit physiologischer NaCl-Lösung getaucht, so daß sich der Innenraum der Meßelektrode (2) füllt. Die NaCl-Lösung dient als Kontaktflüssigkeit, über die die Meßelektrode (2) an die Dentinkanälchen angeschlossen wird. Nachdem die Meßelektrode (2) gefüllt ist, wir die Zahn- beziehungsweise die Dentinoberfläche mit der Meßelektrode (2) abgetastet.

Durch das Aufsetzen der Meßelektrode auf die Oberfläche des Zahnes (8) wird ein elektrischer Stromkreis geschlossen. Aus der Stromquelle (9) fließt über die Meßelektrode (2) Strom in den Zahn (8) hinein und gelangt über die Dentinschicht in die besser leitende Pulpa. Durch das Gewebe des Patienten gelangt der Strom zur Bezugselektrode (11), welche guten elektrischen Kontakt mit dem Zahnfleisch (12) hat. Von der Bezugselektrode (11) gelangt der Strom über ein Meßgerät (10) wieder zur Stromquelle (9), Da die Höhe des Stroms vom elektrischen Widerstand abhängt, kann mit dem Meßinstrument (10) die Höhe des Widerstandes bestimmt werden. Die Höhe des Widerstandes wird im wesentlichen durch die Dicke der Dentinschicht bestimmt.

Zur Erzielung einer genauen Messung muß die Meßelektrode (2) senkrecht mit leichtem Druck auf die Dentinfläche aufgesetzt werden. Da der Dichtungsring (3) stirnseitig etwas über die Meßelektrode (2) hinaussteht, wird dadurch eine präzise Begrenzung der Kontaktfläche erreicht. Hierdurch ist das Meßergebnis sehr zuverlässig und reproduzierbar.

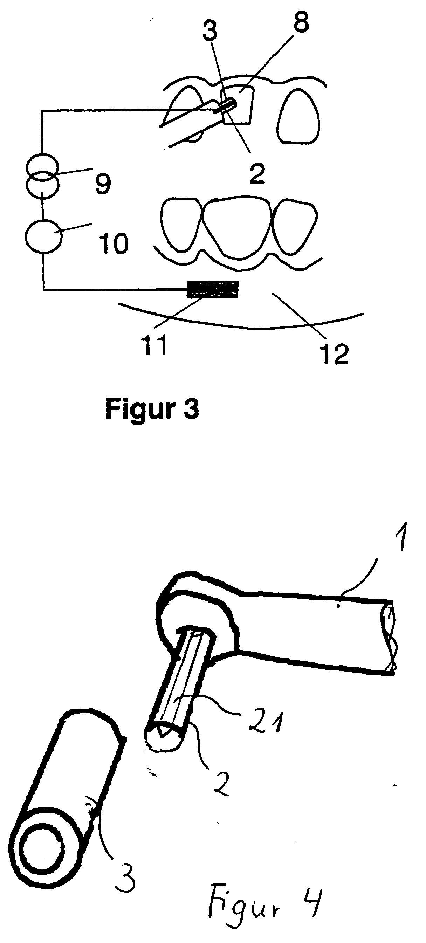

In Fig. 4 ist eine als Vollstab ausgebildete Meßelektrode 2 gezeigt, die am Rande eine Kerbe 21 aufweist, über die von der Halterung 1 Flüssigkeit zur Meßfläche transportiert werden kann. Auch für diese Meßelektrode kann ein entsprechender Dichtungsring 3 vorgesehen sein.

## Patentansprüche

1. Vorrichtung zum Bestimmen des elektrischen Widerstandes von Zähnen (8), insbesondere zum Bestimmen der Dicke des Dentins über der Pulpahöhle, mit einer Meßelektrode (2) mit definierter Meßfläche, die auf die Zahnoberfläche aufsetzbar ist, und einer Bezugselektrode (11), die an das elektrisch leitende Gewebe (12) des Patienten anlegbar ist, ferner mit einer Stromquelle (9) zwischen Meßelektrode und Bezugselektrode (11) zum Einleiten des Stromes in den Zahn (8) über die Meßelektrode (2) und mit einem Meßgerät (10) zum Bestimmen des elektrischen Widerstandes des zwischen den Elektroden (2,11) liegenden Zahnabschnitts,
dadurch gekennzeichnet,
daß die Meßelektrode (2) stabförmig ist und eine Einrichtung zum Zuführen einer elektrisch leitfähigen Flüssigkeit zur Meßfläche aufweist..

2. Vorrichtung nach Anspruch 1, dadurch gekennzeichnet, dass die Meßelektrode (2) ein stabförmiger Hohlkörper ist.

3. Vorrichtung nach Anspruch 1 oder 2, dadurch gekennzeichnet, dass die Meßelektrode (2) hohlzylinderförmig ausgestaltet ist

4. Vorrichtung nach einem der vorhergehenden Ansprüche 2 oder 3, dadurch gekennzeichnet, daß die Meßelektrode (2) an beiden Stirnseiten offen ist.

5. Vorrichtung nach einem der vorhergehenden Ansprüche, dadurch gekennzeichnet, daß die Meßelektrode (2) an einem Ende (4) konisch ausgebildet ist.

6. Vorrichtung nach einem der vorhergehenden Ansprüche dadurch gekennzeichnet, daß ein Dichtungsring (3) vorgesehen ist, welcher die Meßelektrode (2) an ihrer Mantelfläche umschließt.

7. Vorrichtung nach Anspruch 6, dadurch gekennzeichnet, daß der Dichtungsring (3) aus Silikon besteht.

8. Vorrichtung nach einem der vorhergehenden Ansprüche dadurch gekennzeichnet, daß die Meßelektrode (2) fest in einer Halterung (1) angeordnet ist, welche aus einem massiven, elektrisch leitenden Material besteht.

9. Vorrichtung nach Anspruch 8, dadurch gekennzeichnet, daß die Halterung (1) eine isolierende Beschichtung aufweist.

10. Vorrichtung nach Anspruch 8 oder 9, dadurch gekennzeichnet, daß die Halterung (1) lösbar mit einem stabförmigen, handhabbaren Grundkörper (5) verbunden ist.

11. Vorrichtung nach einem der Ansprüche 8 bis 10, dadurch gekennzeichnet, daß der Grundkörper (5) Bedien- und/oder Anzeigeelemente aufweist.

12. Vorrichtung nach Anspruch 1, dadurch gekennzeichnet, daß die Meßelektrode (2) ein Zylinder ist, der der Länge nach eine seitliche Kerbe (21) aufweist.

13. Vorrichtung nach Anspruch 6, dadurch gekennzeichnet, daß der Dichtungsring an einem der beiden Enden konisch ausgeführt ist.
